(19) Europäisches Patentamt
European Patent Office
Office européen des brevets

(11) EP 3 604 376 A1

(12) EUROPEAN PATENT APPLICATION
published in accordance with Art. 153(4) EPC

(43) Date of publication:
**05.02.2020 Bulletin 2020/06**

(21) Application number: **18771362.3**

(22) Date of filing: **01.03.2018**

(51) Int Cl.:
***C08G 59/14*** *(2006.01)* ***C08K 3/013*** *(2018.01)*
***C08K 3/04*** *(2006.01)* ***C08K 7/06*** *(2006.01)*
***C08L 23/00*** *(2006.01)* ***C08L 63/00*** *(2006.01)*

(86) International application number:
**PCT/JP2018/007713**

(87) International publication number:
**WO 2018/173678 (27.09.2018 Gazette 2018/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.03.2017 JP 2017057696**

(71) Applicant: **NIPPON STEEL Chemical & Material Co., Ltd.**
**Tokyo 103-0027 (JP)**

(72) Inventors:
- **YOSHINO, Takahiko**
**Tokyo 103-0027 (JP)**
- **YOSHIOKA, Takahiro**
**Tokyo 103-0027 (JP)**
- **MUKUDAI, Jun**
**Tokyo 103-0027 (JP)**
- **FUJISHIRO, Koichi**
**Tokyo 103-0027 (JP)**

(74) Representative: **Vossius & Partner**
**Patentanwälte Rechtsanwälte mbB**
**Siebertstrasse 3**
**81675 München (DE)**

(54) **ADHESION IMPROVER FOR CARBON-FIBER-REINFORCED RESIN COMPOSITION**

(57) An object of the present invention is to provide an adhesion improver for a carbon fiber-reinforced polyolefin-based resin composition that provides improved mechanical characteristics such as bending strength and bending elastic modulus. The adhesion improver is used for a carbon fiber-reinforced resin composition including carbon fibers and a polyolefin-based resin. The adhesion improver includes an acid-modified polyolefin-based resin unit and an epoxy resin unit. The acid-modified polyolefin-based resin unit and the epoxy resin unit are linked via an ester structure, and the epoxy resin unit includes a secondary hydroxy group.

EP 3 604 376 A1

## Description

[Technical Field]

The present invention relates to an adhesion improver for a carbon fiber-reinforced resin composition that includes a polyolefin-based resin as a matrix resin. More particularly, the present invention relates to an adhesion improver capable of obtaining a carbon fiber-reinforced resin composition to provide a molded product with improved mechanical characteristics such as bending strength and bending elastic modulus.

[Background Art]

In recent years, a carbon fiber-reinforced resin composition has been well-regarded on the mechanical characteristics such as strength, rigidity, low specific gravity, and wear resistance, and has attracted attention as an industrially important material. Particularly, in the fields of automobile parts and electronic material products, a resin composition receiving attention on the high rigidity of carbon fibers has been studied as a substitute material of a metal material or a glass fiber reinforced resin composition. However, in actuality, insufficient adhesion between carbon fibers and a matrix resin, which also functions as a binder resin, makes it impossible to fully use the high rigidity of the carbon fibers.

Since glass fibers (GF) have silanol groups at the surfaces thereof, an increase in strength of a glass fiber reinforced resin composition is generally attained by surface treatment of GF with an aminosilane coupling agent and addition of a polyolefin resin modified by carboxylic acid or the like to a matrix resin for improving interfacial strength between the matrix resin and the reinforced fiber. However, a carbon fiber does not have a silanol group at the surface, as distinct from GF. For this reason, a similar or equivalent method cannot be applied to carbon fibers.

For carbon fibers (CF), various sizing agents (e.g., see PTL 1) are used for ease of the handling of the carbon fiber during impregnation and fiber opening and improvement of wettability with a resin. PTL 2 discloses a carbon fiber-resin composition obtained by impregnating carbon fibers, which has been treated with a sizing agent, with maleic anhydride-modified polyolefin. The impregnability has been indeed improved in this case but the strength has been insufficient.

PTL 3 discloses an example in which the improvement of the strength of a carbon fiber resin composition is aimed at by using a low molecular weight compound. PTL 3 discloses a polyolefin-based resin composition using a modified polyolefin, which has been obtained through the reaction between a polyolefin and an unsaturated carboxylic acid, and adding thereto an inorganic fiber and a multifunctional epoxy compound. PTL 3 also discloses in Examples thereof, a resin composition including a maleic anhydride-modified polypropylene, carbon fibers, and triglycidyl isocyanurate. However, since a modified polypropylene mixture simply contains inorganic fibers and a multifunctional epoxy compound in a resin component, sufficient strength and rigidity are not obtained.

[Citation List]

[Patent Literature]

[PTL 1] Japanese Patent Application Publication No. 2002-13069
[PTL 2] Japanese Patent Application Publication No. 2003-277525
[PTL 3]Japanese Patent Application Publication No. S58-204020

[Summary of Invention]

In view of the above state of the art, an object of the present invention is to provide an adhesion improver that improves the mechanical characteristics, particularly, the bending strength, the bending elastic modulus, and the like, of a polyolefin-based carbon fiber-reinforced resin composition.

In order to attain the object, the present inventors have conducted a close study, and found that the objective mechanical physical properties are improved because an adhesion improver in which an epoxy resin structural unit having a $-CH_2-CH(OH)-CH_2-$ group, which is excellent in adhesion with carbon fibers, and a polyolefin-based resin structure, which is excellent in compatibility with a polyolefin-based resin, are linked via an ester structure enhances the interfacial adhesion between a carbon fiber and a polyolefin-based resin. As a result, the present inventors have completed the present invention.

Namely, the present invention relates to an adhesion improver for a carbon fiber-reinforced resin composition, characterized by including a component derived from an acid-modified polyolefin-based resin and a component derived

from an epoxy resin, the components being linked via an ester structure, and characterized in that the component derived from an epoxy resin includes a secondary hydroxy group.

The adhesion improver desirably satisfies any one or more of the following:

1) The melt viscosity at 170°C is 50 to 1,500 Pa·s; and
2) The acid-modified polyolefin-based resin unit is an acid-modified polypropylene-based resin unit.

Further, the present invention is a method for manufacturing the adhesion improver, the method including, using, as raw materials, an acid-modified polyolefin-based resin having an acid equivalent of 500 to 200,000 g/eq. and an epoxy resin, allowing the acid-modified polyolefin-based resin to react with the epoxy resin in the presence of a catalyst at 150°C to 250°C.

The method for manufacturing the adhesion improver for the carbon fiber-reinforced resin composition desirably satisfies any one or more of the following conditions.

1) The acid-modified polyolefin-based resin is allowed to react with the epoxy resin at a molar ratio (AE/EE) of carboxyl groups (AE) in the acid-modified polyolefin-based resin to epoxy groups (EE) in the epoxy resin of 1/1 to 100/1. Here, the acid means a carboxy group or an acid anhydride group. Since 1 mol of the acid anhydride is equivalent to 2 mol of the carboxy group, it is calculated as 2 mol.
2) The acid-modified polyolefin-based resin is at least one of a (meth)acrylic acid-modified polyolefin resin, a maleic acid-modified polyolefin resin, or a maleic anhydride-modified polyolefin resin.
3) The acid-modified polyolefin-based resin is an acid-modified polypropylene-based resin.
4) The acid-modified polypropylene-based resin is at least one of a (meth)acrylic acid-modified polypropylene resin, a maleic acid-modified polypropylene resin, or a maleic anhydride-modified polypropylene resin.

Another aspect of the present invention is a matrix resin composition for a carbon fiber-reinforced resin composition, the matrix resin composition including: a polyolefin-based resin; and an adhesion improver, characterized in that the adhesion improver includes a component derived from an acid-modified polyolefin-based resin and a component derived from an epoxy resin, the components being linked via an ester structure, the component derived from an epoxy resin including a secondary hydroxy group, and the polyolefin-based resin and the adhesion improver are present at a blend ratio (mass ratio) of is 99/1 to 80/20. Also in this case, the polyolefin-based resin is preferably a polypropylene-based resin.

The adhesion improver according to the present invention can provide a carbon fiber-reinforced polyolefin-based resin composition with improved mechanical characteristics such as bending strength and bending elastic modulus. A molded product including a polyolefin-based carbon fiber-reinforced resin composition using the adhesion improver of the present invention can be preferably used for parts particularly required to have rigidity and durability such as automobile parts, two-wheeled vehicle/bicycle parts, and the like.

[Brief Description of Drawings]

[Fig. 1]
Fig. 1 is a chart of FT-IR of an adhesion improver (C-2) of an Example.
[Fig. 2]
Fig. 2 is a chart of FT-IR of an adhesion improver (SC-2) of a Reference Example.

[Description of Embodiments]

The present invention will be described below in detail.

The adhesion improver of the present invention includes an ester linkage, an acid-modified polyolefin-based resin unit, and an epoxy resin unit including a $-CH_2-CH(OH)-CH_2-$ group (which will be hereinafter also referred to as a secondary hydroxy group) at the same time.

The acid-modified polyolefin-based resin unit and the epoxy resin unit are linked via an ester structure. The secondary hydroxy group is included in the epoxy resin unit. It is to be understood that the ester structure is a linkage unit generated from the carboxyl group or the acid anhydride group of the acid-modified polyolefin-based resin and the epoxy group or hydroxy of the epoxy resin, and the acid-modified polyolefin-based resin unit and the epoxy resin unit are the units except for the portions involved in the linkage unit. Note that the epoxy group of the epoxy resin is ring-opened when an ester structure is formed, the site generated upon ring opening and not involved in the ester structure

is included in the epoxy resin unit.

In the acid-modified polyolefin-based resin unit, an unreacted carboxyl group not involved in generation of the ester linkage is preferably present. It is preferable that secondary hydroxy groups are present and unreacted epoxy groups are not present in the epoxy resin unit, but an unreacted epoxy groups may be present to a certain degree.

The adhesion improver can be obtained from the addition reaction between the acid-modified polyolefin-based resin and the epoxy resin, but the present invention is not limited to this method. However, for description of the structure of the adhesion improver, reference will be made to the manufacturing method.

The secondary hydroxy group improves the adhesion by the hydrogen bond with a carbon fibers or the functional group present on the surface of the sizing material. Further, the structural unit derived from the polyolefin improves the compatibility with the polyolefin-based resin. Use of the adhesion improver solidifies the interfacial strength between the carbon fibers and the polyolefin-based resin, and improves the strength of the molded product resulting therefrom.

When the adhesion improver is obtained by the reaction between an acid-modified polyolefin-based resin and an epoxy resin, the resulting product is preferably a product obtained by removing unreacted raw materials (the acid-modified polyolefin-based resin and the epoxy resin not linked via an ester linkage) from the reaction product, but may be a mixture including a small amount of raw materials left therein. Whether the ester linkage in the reaction product is present or not can be determined by the IR absorption spectrum measurement. In general, there is no solvent for dissolving the reaction product. For this reason, the measurement of the IR absorption spectrum is performed by a reflection method after formation into a film shape. Accordingly, there is no quantitativeness of the peak of the absorption spectrum, but whether the peak of the ester linkage is present or not can be determined. For this reason, the presence of the ester structure is thereby determined.

There are some reactions between an acid-modified polyolefin-based resin and an epoxy resin. The reaction expressed by the following reaction formula (1), (2a), or (2b) is representative.

The reaction formula (1) exemplifies a case where the acid-modified polyolefin-based resin has a carboxyl group, and the addition reaction between the carboxyl group of the acid-modified polyolefin-based resin and the epoxy group of the epoxy resin generates an ester linkage, providing an ester structure. Simultaneously, the epoxy group is ring-opened, so that a secondary hydroxy group structure is generated. Herein, the ester structure is the structure at the linkage part, and the secondary hydroxy group structure is the structure belonging to the epoxy resin unit. Note that when the epoxy resin of the raw material is generated from phenols and epichlorohydrin or the like, a structural unit resulting from the ring-opening polymerization caused by the reaction between the resulting epoxy group and the OH group may be included. This also results in the secondary hydroxy group structure mentioned in the present invention. The secondary hydroxy group structure included in the adhesion improver may be present at the site adjacent to the ester structure, or may be present inside the epoxy resin of the raw material. From the viewpoint of an increase in number of the secondary hydroxy group structures, the secondary hydroxy group structures are preferably present at both the sites.

The reaction formula (2a) or the reaction formula (2b) exemplifies a case where the acid-modified polyolefin-based resin has an acid anhydride group (carboxylic anhydride group). This case includes a case in which, as shown in the formula (2a), the acid anhydride group is ring-opened by the moisture in the raw material or in the air, resulting in two carboxyl groups; then, the reaction of the formula (1) is effected, thereby forming an ester linkage, or a case where, as shown in the formula (2b), the acid anhydride group and the hydroxy group of the epoxy resin form an ester linkage by the addition reaction. Here, the hydroxy group of the epoxy resin is a secondary hydroxy group or the hydroxy group of the $\alpha$-glycol component ($-CH_2-CH(OH)-CH_2-OH$) of the impurity of the epoxy group.

In the case of the formula (2b), as shown therein, an ester linkage is formed, but a secondary hydroxy group is not generated, or rather resulting in a decrease in number of the secondary hydroxy groups included in the raw material epoxy resin. However, in this reaction, a carboxyl group is necessarily generated. For this reason, the same addition reaction with an epoxy group as that of the reaction formula (1) is parallelly effected, so that another secondary hydroxy group is generated.

Therefore, the acid-modified polyolefin-based resin may be either carboxyl group-modified or acid anhydride group-modified. From the viewpoint of the secondary hydroxy group, the former is preferable.

Other than these, the reaction between the carboxyl group and the secondary hydroxy group, or the like may be effected.

[C1]

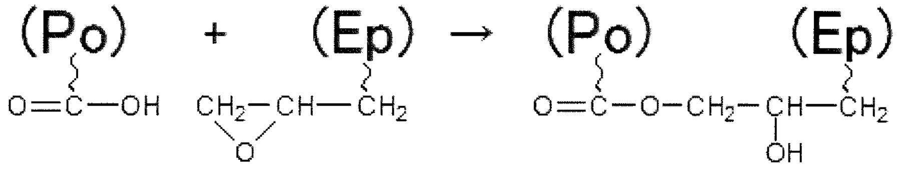

(1)

[C2]

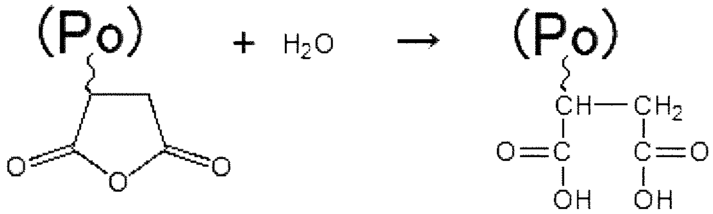

(2a)

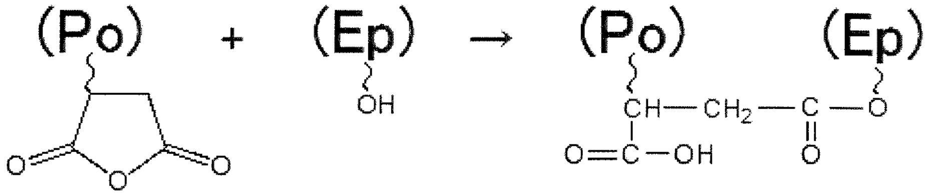

(2b)

In the formula, (Ep) represents an epoxy resin, and (Po) represents an acid-modified polyolefin resin.

The melt viscosity at 170°C of the adhesion improver is preferably 50 to 1,500 Pa·s, more preferably 65 to 1,400 Pa·s, further preferably 75 to 1,300 Pa·s, particularly preferably 80 to 1,000 Pa·s, and most preferably 100 to 800 Pa·s. When the melt viscosity at 170°C is less than 50 Pa·s, the adhesion between the carbon fibers and the polyolefin-based resin becomes insufficient, which may make it impossible to obtain a molded product with a satisfactory strength. In contrast, when the melt viscosity at 170°C exceeds 1,500 Pa·s, the impregnability decreases, which may make it difficult to manufacture a fiber reinforced resin pellet described later. The measuring method of the melt viscosity at 170°C follows the measuring method described in Examples.

The ester linkage of the adhesion improver can be observed by the following: the measurement of the IR absorption spectrum enables the observation of the absorption due to C=O stretching at 1735 to 1750 $cm^{-1}$. Referring to the drawings, the peak indicated with an arrow of Fig. 1 is the absorption peak due to C=O stretching showing the ester linkage. Meanwhile, in Fig. 2, the same absorption peaks are not observed within the same wavelength region. Note that the absorption due to C=O stretching of the carboxylic acid of the acid-modified polyolefin-based resin of the raw material can be observed at 1700 to 1720 $cm^{-1}$, and the absorption due to C=O stretching of the carboxylic anhydride can be observed at 1750 to 1800 $cm^{-1}$.

The $-CH_2-CH(OH)-CH_2-$ structure can be observed in the following manner: by measuring the IR absorption spectrum, the absorption due to O-H stretching can be observed as a broad peak at 3200 to 3600 $cm^{-1}$. However, this absorption can also be observed for the epoxy resin, and can also be observed for the mixture obtained by merely mixing an acid-modified polyolefin resin and an epoxy resin without a reaction.

The structure derived from polyolefin can be observed in the following manner: by measuring the IR absorption spectrum, the absorption due to C-C deformation vibration can be observed at 800 to 1200 $cm^{-1}$; the absorption due to C-H deformation vibration, at 1300 to 1600 $cm^{-1}$; and the absorption due to C-H stretching, at 2800 to 3000 $cm^{-1}$. However, this absorption can also be observed for the acid-modified polyolefin resin, and can also be observed for the mixture obtained by merely mixing the acid-modified polyolefin resin and the epoxy resin without reaction.

In the adhesion improver, the component derived from an epoxy resin includes a secondary hydroxy group. Such secondary hydroxy groups derived from an epoxy resin include the secondary hydroxy group originally included in the skeleton of the epoxy resin, and the secondary hydroxy group resulting from ring opening of the epoxy group upon the reaction between a carboxylic acid group and an epoxy group. The hydroxy group equivalent (g/eq.) is, as described later, 100 to 1000, preferably 150 to 800, and more preferably 200 to 500 in the raw material epoxy resin. When the

hydroxy group equivalent is too large, the improvement in the adhesion by the hydrogen bond to the functional group present at the surface of carbon fibers or the sizing material thereof becomes insufficient. On the contrary, when the hydroxy group equivalent is too small, the melt viscosity increases and the impregnability decreases. The measuring method of the hydroxy group equivalent follows the measuring method described in Examples.

It can be understood that the adhesion improver of the present invention exerts the advantageous effects of the present invention by the following mechanism although it is not sure. Namely, it is considered as follows: the addition reaction between a carboxylic acid group of the acid-modified polypropylene-based resin and an epoxy group of the epoxy resin results in linkage of both by an ester structure, and generation of a secondary hydroxy group derived from the epoxy group; as a result, the acid-modified polypropylene-based resin and the epoxy resin are linked via the ester structure; in addition, the secondary hydroxy group originally included in the skeleton of the epoxy resin, and the secondary hydroxy group resulting from the reaction between the carboxylic acid group and the epoxy group enhance the adhesion with carbon fibers; meanwhile, the structure derived from the polypropylene-based resin enhances the compatibility with the polypropylene-based resin; this can largely contribute to the improvement of the strength and the rigidity of the carbon fiber-reinforced resin composition.

The adhesion improver obtained by any manufacturing method is acceptable so long as it has the above structural units, these are linked via an ester structure, and a $-CH_2-CH(OH)-CH_2-$ structure is included in the epoxy resin structural unit. The one obtained by the manufacturing method of the present invention described later is preferable.

The acid-modified polyolefin-based resin is desirably a polyolefin-based resin modified with an unsaturated carboxylic acid or a derivative thereof, and includes a carboxyl group or a carboxylic anhydride group in the polyolefin-based resin. The resins can be manufactured by the methods described in Japanese Patent Application Publication No. S58-17156, Japanese Patent Application Publication No. H4-198243, and Japanese Patent Application Publication No. 2006-249340, and the like. Namely, when the modification is performed with an unsaturated carboxylic acid, the unsaturated bond reacts with the polyolefin-based resin, resulting in an acid-modified polyolefin-based resin in which a carboxyl group or a carboxylic anhydride group is bonded to the polyolefin-based resin. Alternatively, commercially available products such as MODIC P502, MODIC P553A, and MODIC P565 (these are manufactured by Mitsubishi Chemical Corp.), UMEX 1001, UMEX 1010, UMEX 100TS, and UMEX 2000 (these are manufactured by Sanyo Chemical Industries, Ltd.), and PMA H1000 P (manufactured by TOYOBO Co. Ltd.) can also be used.

Examples of the raw material polyolefin-based resin for use in acid modification may include low density polyethylene resins, ethylene-$\alpha$-olefin copolymers (a-olefins include 1-butene, 1-hexene, 1-octene, and 1-decene), high density polyethylene resins, and polypropylene resins. A polypropylene resin is particularly preferable. Further, the polyolefin-based resins include a polyolefin homopolymer, a polyolefin random copolymer, a polyolefin block copolymer, and the like, and any may be used. Preferable is a propylene homopolymer. Note that the raw material polyolefin-based resin may be a modified resin. However, such a resin is generally expensive, and hence the general-purpose unmodified resins (homo- or co-polymers) as described above are suitable. For the modification of the polyolefin-based resin, methods such as graft modification and copolymerization can be used.

The melt flow rate (MFR) of the raw material polyolefin-based resin is generally 1 to 600 g/10 minutes, preferably 10 to 250 g/10 minutes, and further preferably 20 to 200 g/10 minutes. When the MFR is 1 g/10 minutes or less, the dispersibility of the reinforced fiber in the molded product using the adhesion improver decreases, which may result in poor appearance of the molded product. When the MFR is larger than 600 g/10 minutes, the impact strength decreases. The MFR of the polyolefin-based resin is the value measured according to JIS K 7210-1999 under the conditions at a temperature of 230°C and a load of 2.16 kg.

The polyolefin-based resin can be manufactured by the methods described in Japanese Patent Application Publication No. H5-32723, Japanese Patent Application Publication No. H11-71431, and Japanese Patent Application Publication No. 2002-249624, and the like. Namely, the polyolefin resin can be manufactured by subjecting propylene or the like to slurry polymerization, vapor phase polymerization, or liquid phase block polymerization using a polymerization catalyst. As such a method for manufacturing a propylene polymer, either of batch polymerization and continuous polymerization can be used. The molecular weight at the time of polymerization of the polyolefin resin can be adjusted by the hydrogen amount or the like as described in Japanese Patent Application Publication No. 2002-226510.

Examples of the unsaturated carboxylic acid used for acid modifying the polyolefin-based resin may include unsaturated carboxylic acids such as acrylic acid, methacrylic acid, maleic acid, nadic acid, fumaric acid, itaconic acid, crotonic acid, citraconic acid, sorbic acid, mesaconic acid, and angelic acid. Further, the derivatives of the unsaturated carboxylic acid include acid anhydrides, and the like. Examples thereof may include maleic anhydride, itaconic anhydride, citraconic anhydride, and nadic anhydride. Out of these, unsaturated dicarboxylic acid and derivatives thereof are preferable, and maleic anhydride is particularly preferable.

As the acid-modified polyolefin-based resin, (meth)acrylic acid-modified polyolefin resin, maleic acid-modified polyolefin resin, or maleic anhydride-modified polyolefin resin is preferable. Maleic acid-modified polyolefin resin or maleic anhydride-modified polyolefin resin is more preferable. Maleic anhydride-modified polyolefin resin is further preferable. The polyolefin resin is particularly preferably a polypropylene resin.

The acid equivalent (g/eq.) of the acid-modified polyolefin-based resin is preferably 500 to 200,000, more preferably 600 to 150,000, further preferably 700 to 120,000, particularly preferably 1,000 to 100,000, and most preferably 2,000 to 80,000. Note that the measuring method of the acid equivalent follows the measuring method described in Examples. Note that when the acid-modified polyolefin-based resin is modified with an acid anhydride, evaluation is conducted not as the acid anhydride equivalent, but as two carboxylic acids resulting from ring opening of the acid anhydride. For this reason, the acid equivalent becomes the half value of the acid anhydride equivalent when the acid-modified polyolefin-based resin is modified with an acid anhydride.

The melt viscosity at 170°C of the acid-modified polyolefin-based resin is preferably 0.1 to 1,000 Pa·s, more preferably 0.5 to 950 Pa·s, and further preferably 1 to 900 Pa·s. Note that the measuring method of the melt viscosity follows the conditions described in Examples.

The epoxy resin of another raw material has no particular restriction so long as it has an epoxy group. A multifunctional epoxy resin including two or more epoxy groups is preferable, and a bifunctional epoxy resin having a secondary hydroxy group is particularly preferable. Examples thereof may include, but not limited to, a polyglycidyl ether compound, a polyglycidyl amine compound, a polyglycidyl ester compound, an alicyclic epoxy compound, and other modified epoxy resins. The epoxy resins may be used alone, or the same type of epoxy resins may be used in combination of two or more thereof. Still alternatively, different types of epoxy resins may be used in combination. Note that the epoxy resins for use in the present invention also include a high molecular weight epoxy resin referred to as a so-called phenoxy resin. Further, the skeleton of the phenoxy resin has no particular restriction. Various structures can be used, and the structure of a bisphenol A skeleton is preferable.

Examples of the polyglycidyl ether compound may include a bisphenol A type epoxy resin, a bisphenol F type epoxy resin, a tetramethylbisphenol F type epoxy resin, a biphenol type epoxy resin, a hydroquinone type epoxy resin, a bisphenol fluorene type epoxy resin, a naphthalene diol type epoxy resin, a bisphenol S type epoxy resin, a diphenyl sulfide type epoxy resin, a diphenyl ether type epoxy resin, a resorcinol type epoxy resin, a phenol novolak type epoxy resin, a cresol novolak type epoxy resin, an alkyl novolak type epoxy resin, an aromatic modified phenol novolak type epoxy resin, a bisphenol novolak type epoxy resin, a naphthol novolak type epoxy resin, a β-naphthol aralkyl type epoxy resin, a naphthalene diol aralkyl type epoxy resin, an α-naphthol aralkyl type epoxy resin, a biphenyl aralkyl phenol type epoxy resin, a trihydroxyphenylmethane type epoxy resin, a tetrahydroxyphenylethane type epoxy resin, a dicyclopentadiene type epoxy resin, an alkylene glycol type epoxy resin, and an aliphatic cyclic epoxy resin.

Examples of the polyglycidyl amine compound may include a diaminodiphenylmethane type epoxy resin, a methaxylenediamine type epoxy resin, a 1,3-bisaminomethylcyclohexane type epoxy resin, an isocyanurate type epoxy resin, an aniline type epoxy resin, a hydantoin type epoxy resin, and an aminophenol type epoxy resin.

Examples of the polyglycidyl ester compound may include dimer acid type epoxy resin, hexahydrophthalic acid type epoxy resin, and trimellitic acid type epoxy resin.

As the alicyclic epoxy compounds, mention may be made of aliphatic cyclic epoxy resins such as CELLOXIDE 2021 (manufactured by Daicel Corporation).

Examples of other modified epoxy resins may include a urethane-modified epoxy resin, an oxazolidone ring-containing epoxy resin, an epoxy-modified polybutadiene rubber derivative, a CTBN-modified epoxy resin, an epoxy-modified polyester resin, an epoxy-modified melamine resin, a polyvinyl arene polyoxides (e.g., divinyl benzene dioxide, and trivinyl naphthalene trioxide), and a phosphorus-containing epoxy resin.

The epoxy equivalent (g/eq.) of the epoxy resin is preferably 500 to 40,000, more preferably 1,000 to 35,000, and further preferably 2,000 to 30,000. When the epoxy equivalent is too small, the heat resistance of the molded product may be degraded, whereas, when the epoxy equivalent is too large, the one with an increased molecular weight is used as a raw material, resulting in the reduction of the impregnability. This may make it difficult to manufacture a fiber reinforced resin pellet described later.

The alcoholic hydroxy group equivalent of the epoxy resin is preferably 100 to 1,000, and more preferably 150 to 800. Most of alcoholic hydroxy groups are comprised of a secondary hydroxy group, and also include an α-glycol component of the impurity of the epoxy group. In the case of a bifunctional epoxy resin, the larger the molecular weight is, the more equal to the value of the secondary hydroxy group the value is, so that the α-glycol component of the impurity of the end group is negligible. Within this range, the epoxy resin structural unit can sufficiently exert the effect of improving the adhesion with the carbon fibers as an adhesion improver.

The melt viscosity at 170°C of the epoxy resin is preferably 1 to 5,000 Pa·s, more preferably 5 to 4,500 Pa·s, further preferably 10 to 4,000 Pa·s, and particularly preferably 50 to 3,000 Pa·s. When the melt viscosity is too high, the one increased in molecular weight is used as a raw material, resulting in reduction of the impregnability. This may make it difficult to manufacture a fiber reinforced resin pellet described later. The measuring method of the melt viscosity is the same as described above.

For the blend ratio when the acid-modified polyolefin-based resin and the epoxy resin are allowed to react with each other, the molar ratio (AE/EE) between the carboxyl group (AE) of the acid-modified polyolefin-based resin and the epoxy group (EE) of the epoxy resin is desirably adjusted. The blend ratio is preferably 1/1 to 100/1, more preferably

1.5/1 to 90/1, and further preferably 2/1 to 50/1. Within this range, the reaction therebetween proceeds with reliability, so that the objective adhesion improver can be obtained. In the case of the acid anhydride group, 1 mol of an acid anhydride group is calculated as 2 mol of a carboxyl group.

Then, a description will be given to the method for manufacturing the adhesion improver of the present invention.

The method for manufacturing the adhesion improver of the present invention is characterized by including the step of, using, as raw materials, an acid-modified polyolefin-based resin having an acid equivalent of 500 to 200,000 g/eq. and an epoxy resin, allowing the acid-modified polyolefin-based resin to react with the epoxy resin in the presence of a catalyst at 150°C to 250°C.

The manufacturing method has no particular restriction. A so-called polymer alloy manufacturing method in which two or more polymers are chemically bonded, thereby forming a blend polymer can be preferably used. Particularly, desirable is a method in which respective components including an acid-modified polyolefin-based resin and an epoxy resin are uniformly mixed, and are allowed to react with each other. Known melt kneaders such as single screw or twin screw extruder, Banbury mixer, kneader, or mixing roll, may be used.

For the blend ratio of the acid-modified polyolefin-based resin and the epoxy resin, the molar ratio (AE/EE) between the carboxyl group of the acid-modified polyolefin-based resin (AE) and the epoxy group of the epoxy resin (EE) is desirably adjusted. The blend ratio is preferably 1/1 to 100/1, more preferably 1.5/1 to 90/1, and further preferably 2/1 to 50/1.

When the molar ratio (AE/EE) is too small, the compatibility of the adhesion improver with the polyolefin-based resin decreases. This may result in reduction of the interfacial strength between the adhesion improver and the polyolefin-based resin, and the reduction of the mechanical strength of the molded product, whereas, when the molar ratio is too large, the adhesion improver may be in the form of a core-shell structure in which the epoxy resin of a polar resin serves as a core, and the acid-modified polyolefin resin having amphiphilicity serves as a shell. When the adhesion improver assumes such a form, the adhesion improver is present in the polyolefin-based resin. For this reason, the epoxy resin structural unit in the adhesion improver cannot come in contact with the carbon fibers. This may prevent the function from being exerted.

Note that as in the reaction formula (2b), with the reaction between the acid-modified polyolefin resin and the epoxy resin, the reaction with the hydroxy group included in the epoxy resin may result in an ester linkage. However, with the manufacturing method of the present invention, the carboxyl group of the acid-modified polyolefin resin preferentially undergoes an esterification reaction with the epoxy group of the epoxy resin. Accordingly, the reaction with the hydroxy group included in the epoxy resin is hardly effected. For this reason, the blend ratio of the acid-modified polyolefin resin and the epoxy resin is preferably controlled on the basis of the ratio of (AE) and (EE).

By setting the reaction conditions such that the carboxyl groups are in an excess amount, it can be configured as follows: unreacted carboxyl groups are present in the acid-modified polyolefin-based resin unit, and secondary hydroxy groups are present in the epoxy resin unit; but the unreacted epoxy groups are not present or are present in a slight amount. Then, the amount of unreacted carboxyl groups in the acid-modified polyolefin-based resin unit can be simply calculated from the molar ratio (AE/EE).

The reaction temperature is 150°C to 250°C, preferably 160°C to 200°C, and more preferably 165°C to 180°C. The temperature higher than the melting point of the raw material acid-modified polyolefin-based resin by 15°C to 20°C is particularly preferable. When the reaction temperature is less than 150°C, the acid-modified polyolefin-based resin is not molten. For this reason, uniform melting and mixing may be impossible. Whereas, when the reaction temperature exceeds 250°C, the molecular weight may be reduced due to cutting of the molecular chain, causing the reduction of the strength of the molded product.

The reaction time has no particular restriction, and may only be about 1 to 30 minutes in the case of general melting and kneading. Although depending upon the reaction temperature, in the case of a too short reaction time, the elapsed time from completion of dissolution or melting of each component is too short. For this reason, the inside of the system may not reach a uniform state. This may result in an unreacted state, or nonuniform reaction. On the contrary, although depending upon the reaction temperature, in the case of a too long reaction time, each component may undergo deterioration such as decomposition. The reduction of the molecular weight may result in the reduction of the mechanical strength as the molded product, and formation of by-products increases the number of crosslinking points in the molecular chain structure, which may cause degradation of the fatigue resistance as the molded product.

The catalyst usable for the reaction has no particular restriction. Examples thereof may include lithium compounds such as lithium chloride and butoxy lithium; complex salts of boron trifluoride; quaternary ammonium salts such as tetramethylammonium chloride, tetramethylammonium bromide, tetrabutylammonium bromide, tetramethylammonium iodide, and tetraethylammonium iodide; tertiary amines such as dimethylaminoethanol, triethylamine, tributylamine, benzyl dimethyl amine, and N-methylmorpholine; phosphines such as triphenylphosphine and tris(2,6-dimethoxyphenyl) phosphine; phosphonium salts such as amyl triphenylphosphonium bromide, diallyldiphenylphosphonium bromide, ethyltriphenylphosphonium chloride, ethyltriphenylphosphonium bromide, ethyltriphenylphosphonium iodide, tetrabutylphosphonium acetate/acetic acid complex, tetrabutylphosphonium acetate, tetrabutylphosphonium chloride, tetrabutylphosphonium bromide, and tetrabutylphosphonium iodide; imidazoles such as combinations of triphenylantimony and iodine, 2-phenylimidazole, 2-methylimidazole, and 2-ethyl-4-methylimidazole or modified agents thereof. The catalysts may be used alone, or two or more thereof in combination. Alternatively, the catalysts may be divided and used several times.

The catalyst amount has no particular restriction, and is preferably 0.0001 to 10 mass%, more preferably 0.005 to 5 mass%, further preferably 0.01 to 2 mass%, and particularly preferably 0.05 to 1 mass% based on the total amount of the acid-modified polyolefin-based resin and the epoxy resin. When the catalyst amount is too small, the reaction does not proceed, so that an ester linkage may not be formed. Note that when the carbon fiber-reinforced resin composition or a molded product thereof may be adversely affected, it is necessary to minimize the amount of the catalyst to be used, or to remove the catalyst after the reaction.

The order of adding reaction raw materials depends upon the raw materials to be selected and the reaction mechanism thereof, and hence has no particular restriction. Basically, preferable is a manufacturing method wherein respective components are added in the order in which the catalyst is not charged first. Namely, suitable is a method in which an acid-modified polyolefin-based resin is first charged, and molten, a catalyst is then added, and an epoxy resin is finally added for reaction; a method in which an epoxy resin is first charged, for example, an amine type catalyst is added to form an amine adduct, and then an acid-modified polyolefin-based resin is finally added for reaction; a method in which an acid-modified polyolefin-based resin and an epoxy resin are charged, then, both are then mixed well at a constant temperature, and a catalyst is finally added for reaction; or other methods.

Note that when a catalyst is charged first, the degree of proceeding of the reaction in the system becomes uneven. Accordingly, gelation may be caused at the site at which the reaction proceeds excessively locally.

The matrix resin composition (which is also referred to as a resin component) of the present invention includes a polyolefin-based resin as the main component. The adhesion improver is in the matrix resin composition, and improves the adhesion between the carbon fibers as a reinforced material and the matrix resin composition. Note that the matrix resin composition may function as a binder resin composition.

The blend ratio (the former/the latter; mass ratio) of the polyolefin-based resin of the matrix resin composition and the adhesion improver is 99/1 to 80/20, and preferably 98/2 to 85/15. When the ratio of the adhesion improver to the total amount of the polyolefin-based resin serving as the matrix resin composition and the adhesion improver is less than 1 mass%, the effect of improving the adhesion between the carbon fibers and the polyolefin-based resin by the adhesion improver is insufficient. When the blend ratio exceeds 20 mass%, the heat resistance of the molded product may be degraded.

As the polyolefin-based resin, the same resin as the polyolefin-based resin for use in the acid-modified polyolefin-based resin can be used. Examples of the polyolefin-based resin may include, for example, a polyethylene resin and a polypropylene resin. A polypropylene resin is particularly preferable. Further, a modified polyolefin homopolymer, a polyolefin random copolymer, a polyolefin block copolymer, and the like are included. For modification of the polyolefin-based resin, a method such as graft modification or copolymerization can be used.

Note that the adhesion improver or the matrix resin composition of the present invention are mixed together with carbon fibers. This can provide a carbon fiber-reinforced resin composition. Hereinafter, the carbon fibers are also referred to as a component (A); the polyolefin-based resin, as a component (B); and the adhesion improver, as a component (C).

The blend ratio of the components (A) to (C) in the carbon fiber-reinforced resin composition is preferably set as the following ranges by mass% ratio.

Preferably,

(A):[(B)+(C)] = (1 to 80) : (99 to 20)
[(A)+(B)]:(C) = (80.1 to 99) : (19.9 to 1)

More preferably,

(A):[(B)+(C)] = (1 to 60):(99 to 40)
[(A)+(B)]:(C) = (80.1 to 99):(19.9 to 1)

further preferably,

(A):[(B)+(C)] = (2 to 50):(98 to 50)
[(A)+(B)]:(C) = (85 to 98):(15 to 2), and

particularly preferably,

(A):[(B)+(C)] = (10 to 40):(90 to 60)

[(A)+(B)]:(C) = (85 to 98):(15 to 2).

When the ratio of the carbon fibers is less than 1 mass%, the resin reinforcing effect by the carbon fibers is not exhibited. When the ratio exceeds 80 mass%, the toughness may be lost.

When the mixing amount of the adhesion improver is preferably 1 to 19.9 mass% based on the total amount of the carbon fibers, the polyolefin-based resin, and the adhesion improver. When the ratio of the adhesion improver is less than 1 mass%, the effect of improving the adhesion between the carbon fibers and the polyolefin-based resin by the adhesion improver is insufficient. When the ratio exceeds 19.9 mass%, the heat resistance of the molded product may be degraded.

As the carbon fibers, various conventionally known carbon fibers can be used, and commercially available products can be preferably used. Examples thereof may include PAN type carbon fibers, pitch type carbon fibers, rayon type carbon fibers, cellulose type carbon fibers, gas phase deposition type carbon fibers, and graphitized fibers thereof. Note that the PAN type carbon fibers are carbon fibers from a polyacrylonitrile fiber; the pitch type carbon fibers are carbon fibers from a petroleum tar or a petroleum pitch; the cellulose type carbon fibers are carbon fibers from a viscose rayon, cellulose acetate, or the like; and the gas phase deposition type carbon fibers are carbon fibers from a hydrocarbon or the like. The kind of the carbon fibers have no particular restriction. Further, the carbon fibers not only may be used alone, but also may be used in mixture of a plurality thereof.

The form of the carbon fibers has no particular restriction, and various forms and the like can be preferably used. Mention may be made of a tow form in which single fibers are converged, a chopped form in which a fiber bundle is cut into a given length, a milled form in which a fiber bundle is cut still more finely than in the chopped form, a cloth form in which a fiber bundle is formed in a woven fabric state, a form in which the tow is opened, and yarns are paralleled in one direction, and held by a weft auxiliary yarn, a form in which short fiber-shaped carbon fibers are processed into a mat or nonwoven fabric shape, or the like. From the viewpoint of the processability for compounding with a resin composition, and formation into a carbon fiber-reinforced resin composition, various carbon fiber raw materials in the forms more preferable for their respective processing methods are used. Meanwhile, from the viewpoint of expression of the strength when a carbon fiber-reinforced resin composition is formed, resulting in a molded product, a raw material with a long fiber length is preferable, and particularly a tow form is preferable.

Further, to the carbon fiber-reinforced resin composition, various thermoplastic resins other than a polyolefin resin and additives can be additionally added, according to the intended use. Examples of such additives include reforming additives such as a dispersant, a lubricant, a plasticizer, a flame retarder, an antioxidant (a phenol type antioxidant, a phosphorus antioxidant, or a sulfur type antioxidant), an antistatic agent, a light stabilizer, an ultraviolet absorber, a crystallization accelerator (a crystal nucleating agent), a blowing agent, a cross linker, and an antimicrobial agent; coloring agents such as a pigment and a dye; particulate fillers such as carbon black, titanium oxide, red iron oxide, an azo pigment, an anthraquinone pigment, a phthalocyanine, talc, calcium carbonate, mica, and clay; short fiber-shaped filler such as wollastonite, and whisker such as potassium titanate. The additives may be added during pellet manufacturing to be included in the pellet, or may be added when a molded product is manufactured from the pellet.

The method for manufacturing a carbon fiber-reinforced resin composition has no particular restriction, and a conventionally known method can be preferably used. Examples of such a method include a manufacturing method wherein a resin is impregnated into carbon fibers in a tow form in which single fibers are converged, a chopped form in which a fiber bundle is cut into a given length, a milled form in which a fiber bundle is cut still more finely than in the chopped form, or other forms for compounding, to obtain a so-called carbon fiber-reinforced pellet capable of extrusion/injection molding, a manufacturing method wherein a resin is impregnated into carbon fibers in a cloth form in which a fiber bundle is formed in a woven fabric state, a form in which the tow is opened, and yarns are paralleled in one direction, and held by a weft auxiliary yarn, a form in which a short fiber-shaped carbon fiber is processed into a mat or nonwoven fabric shape, or other forms for compounding, to obtain a so-called prepreg sheet/stampable sheet capable of press forming, or other methods. From the viewpoint of combination of the molding processability and the strength, the carbon fiber-reinforced pellet is preferable, and particularly, a so-called long fiber reinforced pellet resulting in a carbon fiber-reinforced pellet using a tow is particularly preferable.

When the carbon fiber-reinforced resin composition is obtained as a short fiber reinforced resin pellet, manufacturing can be performed by melting and kneading a part or the whole of the components (A) to (C) in an extruder, or the like. In the case of a long fiber reinforced resin pellet, manufacturing can be performed with a known method such as a pultrusion method. A part of the components (A) to (C) may be separately molten and kneaded, followed by blending.

The fiber reinforced resin pellet may be deformed into a powder shape or a flake shape.

A long fiber reinforced resin pellet results in a large aspect ratio of the fiber in the composition, and tends to provide a high strength composition, and hence can provide more remarkable effects. The pellet length of the long fiber reinforced resin pellet is generally 2 to 200 mm, and products with a pellet length of about 10 to 30 mm are commercially available, and these can be preferably used. A longer pellet length results in a longer fiber length included in the pellet, and hence is preferable from the viewpoint of the strength expression. A too long pellet length may make molding difficult.

However, any molding method is acceptable so long as the method ensures the moldability, and it is not necessary to impose a particular upper limit. A too short pellet length may reduce the effect of improving the rigidity, the heat resistance, and the mechanical characteristics, and may also increase the warp deformation. The pellet length has no particular restriction, and is preferably 10 mm or more, more preferably 12 mm or more, and further preferably 15 mm or more. The carbon fibers in the pellet are preferably arrayed substantially in parallel with each other with respect to the longitudinal direction of the pellet because of the longer fiber length.

A long fiber reinforced resin pellet can be obtained with ease in the following manner: a roving of reinforced fibers including several thousands of filaments is guided to an impregnating die, and a molten resin is uniformly impregnated between the filaments; then, the resulting product is cut into a necessary length (e.g., 2 to 200 mm). For example, the following method is also acceptable: into the impregnating die provided at the extruder tip, a molten resin including the components (B) and (C) is supplied from the extruder; on the other hand, a continuous fiber bundle is passed therethrough, and the fiber bundle is impregnated with the molten resin; then, the resulting product is pulled out through a nozzle, to be pelletized to a necessary length; the component (B) and the component (C) are dry blended, and charged into the hopper of the extruder; at the same time, while also performing melt mixing or modification, the resulting product is supplied.

The method for impregnating a molten resin in carbon fibers have no particular restriction. There can be used any methods such as a method in which a reinforced fiber roving is passed through a resin powder fluidized bed, and then, is heated to the melting point of the resin or higher (Japanese Examined Patent Publication No. S52-3985), a method in which using a crosshead die, the roving of the reinforced fiber is impregnated with a molten resin (Japanese Patent Application Publication No. S62-60625, Japanese Patent Application Publication No. S63-132036, Japanese Patent Application Publication No. S63-264326, Japanese Patent Application Publication No. H1-208118), a method in which a resin fiber and a roving of a reinforced fiber are combined, and then, the resulting product is heated to the melting point of the resin, or higher, for impregnation with the resin (Japanese Patent Application Publication No. S61-118235), a method in which a plurality of rods are arranged in the inside of the die, and a roving is wound thereover in a zigzag form for fiber opening, and thereby impregnating a molten resin therein (Japanese Patent Application Publication No. H10-264152), and a method in which a molten resin is passed through between fiber opening pins without contact with the pins (WO 97/19805).

During the process of melting a resin, using an extruder having two or more feed parts, a resin and additives including a decomposing agent of a resin such as an organic peroxide or the like may be charged from the top feed, and another resin may be charged from the side feed. The addition of the resin decomposing agent can slightly decompose a polyolefin-based resin, to thereby reduce the molecular weight, and can enhance the impregnability.

Alternatively, using two or more extruders (extruding parts), a resin and a decomposing agent of the resin may be charged into one or more extruders of these. Further, a resin and a decomposing agent of the resin may be charged into at least one site of the extruder.

A short fiber reinforced resin pellet can be manufactured by well kneading and dispersing respective components at prescribed ratios by a roll mill, a Banbury mixer, a kneader, or the like. Dry blending may be performed by a tumbler type blender, a Henschel mixer, a ribbon mixer, or the like. Respective components are kneaded by a single screw extruder, a twin screw extruder, or the like, resulting in a molded material in a pellet shape.

By molding a carbon fiber-reinforced resin composition, it is possible to obtain a molded product. As the molding method of the present invention, a known molding method such as an injection molding method, an extrusion molding method, a hollow molding method, a compression molding method, a compression molding method, a gas injecting injection molding method, or an expansion injection molding method can be applied without any restriction. Particularly, an injection molding method, a compression molding method, and an injection compression molding method are preferable. The molding temperature may be generally within the range of preferably 150°C to 250°C, and more preferably 160°C to 220°C. For this reason, for the resin component, a material showing a proper melt viscosity within such a molding temperature range is selected.

To the fiber reinforced resin pellet of a carbon fiber-reinforced resin composition, a diluent including a thermoplastic resin such as the same polypropylene-based resin as the fiber reinforced resin pellet can be mixed in order to adjust the composition ratio. For mixing with the diluent, a dry blend method can be used. In order to keep the fiber length in the composition, and obtain a higher improving effect of the rigidity, the impact resistance, and the durability, after dry blending, the resulting product is preferably not passed through the extruder, and is charged directly to a molding machine such as an injection molding machine. The blend ratio of the diluent is determined by the reinforced fiber content of the fiber reinforced resin composition pellet, and the reinforced fiber content required of the final molded product, and generally, is preferably within the range of 20 to 80 mass% in terms of the improving effect of the rigidity, the impact resistance, and the durability.

When the average fiber length of the carbon fibers present after molding is too short, the improving effect of the rigidity, the strength, the impact resistance, and the like becomes less likely to be obtained. For this reason, the too short average fiber length is not preferable, and the average fiber length is preferably 0.1 mm or more. From the viewpoint

of the strength expression, a longer length is more preferable. However, when carbon fibers with a length largely exceeding the size of the molded product are present in a winding shape or innumerably in a crossing shape in the molding product, voids tend to be formed between the carbon fibers, and the probability of formation of a void region to be unimpregnated with a resin, a so-called void in the molding product increases, which may cause the reduction of the strength. Therefore, the length equal to or smaller than the length twice the longest length of the dimensions of the molded product is one criterion of the fiber length upper limit value, which is not particularly intended to set the upper limit value.

## Examples

The present invention will be specifically described by way of Examples and Comparative Examples. However, the present invention is not limited thereto. Unless otherwise specified, "part" represents "part by mass", and "%" represents mass%.

Various physical properties were measured by the following methods, respectively.

(1) Epoxy equivalent: measurement was performed according to JIS K 7236 standard. Specifically, using a potentiometric titration device, tetrahydrofuran was used as a solvent, and a brominated tetraethylammonium acetate solution was added thereto. A 0.1 mol/L perchloric acid-acetic acid solution was used.

(2) Acid equivalent: the acid value was measured according to JIS K 0070 standard, and was converted into the acid equivalent. Specifically, a sample was dissolved in about 140°C hot xylene. Then, measurement was performed using a 0.1N-KOH ethanol solution with a neutralization titration method using phenolphthalein as an indicator.

(3) Hydroxy group equivalent: the amine resulting from the reaction between phenyl isocyanate and the alcoholic hydroxy group in the sample was back titrated with hydrochloric acid with known concentration, thereby to determine the hydrochloric acid amount required for neutralization. Thus, the hydroxy group equivalent was determined by calculation. Specifically, the sample was dissolved in dry dimethylformamide. Then, the resulting sample was mixed with a dry toluene solution of 1 M phenyl isocyanate. Further, a catalyst amount of dibutyl tin maleate was added thereto, and the mixture was stirred at room temperature for two hours for reaction. After completion of the reaction, a dry toluene solution of 2 M dibutylamine was added, and was well mixed, to be allowed to react with excess phenyl isocyanate. Then, bromocresol green was added thereto as an indicator, and was titrated with a 1N perchloric acid-methyl cellosolve solution. The hydroxy group equivalent was determined from the titration solution amount required for the neutralization.

(4) Glass transition temperature (Tg): measurement was performed according to JIS K 7121, differential scanning calorimetry. Using EXTER DSC6200 manufactured by Seiko Instruments Inc., measurement was performed at a heating rate of from 20°C to 10°C/min. The glass transition temperature was determined from the extrapolated glass transition initiation temperature (Tig) of the DSC chart obtained at the second cycle.

(5) IR chart: using a FT-IR infrared spectroscopy device 1760X manufactured by PerkinElmer Co., Ltd., the infrared absorption spectrum of the one obtained by pressing an adhesion improver into a film shape was measured by a reflection method.

(6) Melt viscosity: using RheoStress 600 manufactured by HAAKE Co., as an analysis device, the stress control by shear was measured using a parallel corn with a diameter of 20 mm, with 0.3 g of sample at setting of Ghamma: 0.2%, and gap: 0.5 mm. At a constant temperature of 170°C, the melt viscosity was determined from the viscosity equivalent value from the shear stress.

(7) Interfacial shear strength: using a composite material interfacial characteristics evaluation device (HM410 manufactured by Tohei Sangyo Corporation), with a microdroplet method, the interfacial adhesion between carbon fiber/resin was evaluated. Specifically, a carbon fiber filament is pulled out from a carbon fiber strand, and is set at a sample holder. A drop of the heated and molten resin composition was formed on the carbon fiber filament, resulting in a sample for measurement. The resulting sample was set at the device, and the drop was sandwiched by device blades, and the carbon fiber filament was allowed to run on the device at a speed of 2 μm/s, thereby measuring the maximum pull-out load F when the drop is pulled out from the carbon fiber filament. By the following equation, the interfacial shear strength τ was calculated.

Note that, for every one sample, the interfacial shear strengths τ of about 10 to 20 drops were measured, and the average value thereof was determined.

$$\text{Interfacial shear strength } \tau \text{ (unit: MPa)} = F/\pi dl$$

(F: maximum pull-out load, d: carbon fiber filament diameter, and l: drop diameter in pull-out direction)

(8) Tensile rupture strength, tensile BR/E elastic modulus, and tensile rupture strain: a universal material tester

(5582 type manufactured by Instron) was used. At room temperature, a dumbbell specimen with dimensions of an overall length of 215 mm including a grip part, a width of 10 mm, and a thickness of 4 mm was subjected to a tensile test at a chuck distance of 114 mm, and a speed of 50 mm/min. As a result, the tensile rupture strength, the tensile elastic modulus, and the tensile rupture strain were determined from the resulting stress-strain view.

(9) Bending strength and bending elastic modulus: a fully automatic bending tester (BENDOGRAPH tester manufactured by Toyo Seiki Seisaku-sho, Ltd.) was used. At room temperature, a bar-shaped specimen with dimensions of a length of 80 mm, a width of 10 mm, and a thickness of 4 mm was subjected to a 3-point bending test at a speed of 2 mm/min. As a result, the bending strength and the bending elastic modulus were determined from the resulting stress-strain view.

(10) Charpy impact strength: a Charpy impact tester (No. 258PC-S manufactured by Yasuda Seiki Seisakusho, Ltd.) was used. At room temperature, a Charpy impact test was conducted with an impact specimen with a length of 80 mm, a width of 10 mm, and a thickness of 4 mm having a V notch with a depth of 2 mm penetrating the board thickness with the specimen longitudinal direction assumed as the MD direction. The absorption energy was determined from the difference in hammer position energy between before and after rupture of the specimen, and was taken as the Charpy impact value.

(11) Load deflection temperature: a load deflection temperature tester (No. 148-HDPC-3 manufactured by Y Yasuda Seiki Seisakusho, Ltd.) was used. For a multi-purpose specimen with a length of 80 mm, a width of 10 mm, and a thickness of 4 mm, with a bending stress applied thereto at a span of 64 mm, the temperature of an oil tank was raised at a rate of 120°C/min. Thus, the temperature when a prescribed deflection amount (0.34 mm) was reached was referred to as a load deflection temperature. (12) Carbon fiber content: a specimen previously measured for the mass was fired at 600°C for 30 minutes in a muffle furnace, thereby fully burning the resin. Then, the mass of the residue was weighed out. The mass ratio between before and after firing (residue mass/specimen mass) was calculated, and expressed in terms of percentage.

Each abbreviation of the used materials will be shown below, and the physical property values are shown in Table 1.

(A) Carbon fiber:
A-1: PAN type carbon fiber, TR50S manufactured by Mitsubishi Rayon Co., Ltd. (fiber diameter: 7 μm, tensile strength: 4.9 GPa, and tensile elastic modulus: 240 GPa)
(B) Polyolefin-based resin:

B-1: polypropylene resin, MA1B (MFR = 21 g/10 minutes) manufactured by Japan Polypropylene Corporation
B-2: polypropylene resin, SA08 (MFR = 70 g/10 minutes) manufactured by Japan Polypropylene Corporation

(d) Acid-modified polyolefin-based resin:

d-1: maleic anhydride-modified polypropylene resin, MODIC P565 manufactured by Mitsubishi Chemical Corporation
d-2: maleic anhydride-modified polypropylene resin, UMEX 1010 manufactured by Sanyo Chemical Industries, Ltd.
d-3: maleic anhydride-modified polypropylene resin, PMA H1000P manufactured by TOYOBO Co., Ltd.

(e) Epoxy resin:

e-1: BPA type phenoxy resin, YP-50S manufactured by Nippon Steel & Sumikin Chemical Co., Ltd.

e-2: BPA type phenoxy resin, Pheno Tohto YP-55 manufactured by Nippon Steel & Sumikin Chemical Co., Ltd.

e-3: BPA/BPF copolymer type phenoxy resin, Pheno Tohto YP-70 manufactured by Nippon Steel & Sumikin Chemical Co., Ltd.

e-4: BPA type epoxy resin, Epo Tohto YD-017 manufactured by Nippon Steel & Sumikin Chemical Co., Ltd.

e-5: BPA type epoxy resin, Epo Tohto YD-019 manufactured by Nippon Steel & Sumikin Chemical Co., Ltd.

(f) Other components:
f-1: catalyst, Curezol 2E4MZ-A manufactured by Shikoku Chemicals Corporation

[Table 1]

| | B-1 | B-2 | d-1 | d-2 | d-3 | e-1 | e-2 | e-3 | e-4 | e-5 |
|---|---|---|---|---|---|---|---|---|---|---|
| Epoxy equivalent (g/eq.) | | | | | | 30000 | 9000 | 11000 | 1900 | 2700 |
| Hydroxy group equivalent (g/eq.) | | | | | | 285 | 286 | 265 | 312 | 299 |
| Acid equivalent (g/eq.) | | | 70000 | 1000 | 800 | | | | | |
| Glass transition temperature (°C) | | | | | | 85 | 92 | 80 | 74 | 80 |
| Melting point (°C) | | | 150 | 145 | 150 | | | | | |
| Melt viscosity (Pa·s) | 610 | 240 | 890 | 1.6 | 69 | 3000 | 1900 | 700 | 14 | 46 |

Example 1

Into a kneading and extrusion molding machine (LABO PLASTOMILL 4C150 manufactured by Toyo Seiki Seisaku-sho, Ltd.), the mixer inside of which had been previously preheated to 170°C, d-1 was charged in an amount of 90 parts as an acid-modified polyolefin-based resin, and e-1 was charged in an amount of 10 parts as an epoxy resin. Then, 1-minute preheating and melting were performed. Subsequently, as a catalyst, f-1 was additionally charged in an amount of 1 part, and 6-minute heating and melt mixing were performed at 170°C. After completion of melt mixing, the resulting product was taken out of the system, and was allowed to cool, resulting in an adhesion improver (C-1). The presence or absence of the IR absorption derived from the ester linkage and the melt viscosity of the resulting adhesion improver were measured, and the results are shown in Table 2.

Examples 2 to 5, and Examples 13 to 19, Reference Examples 1 and 2

Adhesion improvers (C-2 to 12, and SC-1 and 2) were obtained by the same operation using the same device as in Example 1, with the acid-modified polyolefin-based resins d-1 to 3, the epoxy resins e-1 to 5, and the catalyst f-1 at respective blend ratios (parts) described in Table 2A and Table 2B. The presence or absence of the IR absorption derived from the ester linkage and the melt viscosity of each resulting adhesion improver were measured. The results are shown in Table 2. Note that the molar ratio in the table represents the molar ratio (AE/EE) of the carboxy group (AE) of the acid-modified polyolefin-based resin and the epoxy group (EE) of the epoxy resin.

[Table 2A]

| Example | 1 | 2 | 3 | 4 | 5 | Reference 1 | Reference 2 |
|---|---|---|---|---|---|---|---|
| d-1 | 90 | | | | | 90 | |
| d-2 | | 50 | | | | | 50 |
| d-3 | | | 50 | 50 | 70 | | |
| e-1 | 10 | 50 | 50 | 50 | 30 | 10 | 50 |
| f-1 | 1 | 1 | 1 | 0.1 | 1 | | |
| Molar ratio | 3.9 | 30.0 | 38.0 | 38.0 | 88.0 | 3.9 | 30.0 |
| Adhesion improver | C-1 | C-2 | C-3 | C-4 | C-5 | SC-1 | SC-2 |
| Ester linkage | Present | Present | Present | Present | Present | None | None |
| Melt Viscosity (Pa·s) | 734 | 692 | 525 | 198 | 130 | 700 | 17 |

[Table 2B]

| Example | 13 | 14 | 15 | 16 | 17 | 18 | 19 |
|---|---|---|---|---|---|---|---|
| d-2 | | | | 90 | 90 | | |
| d-3 | 50 | 50 | 70 | | | 90 | 90 |

(continued)

| Example | 13 | 14 | 15 | 16 | 17 | 18 | 19 |
|---|---|---|---|---|---|---|---|
| e-2 | 50 | | | | | | |
| e-3 | | 50 | 30 | | | | |
| e-4 | | | | 10 | | 10 | |
| e-5 | | | | | 10 | | 10 |
| f-1 | | | | 1 | 1 | 1 | 1 |
| molar ratio | 11.0 | 14.0 | 32.0 | 17.0 | 24.0 | 21.0 | 30.0 |
| Adhesion improver | C-6 | C-7 | C-8 | C-9 | C-10 | C-11 | C-12 |
| Ester linkage | Present | Present | Present | Present | Present | Present | Present |
| Melt viscosity (Pa·s) | 1028 | 692 | 484 | 161 | 94 | 1233 | 436 |

Example 6

Into a kneading and extrusion molding machine, the mixer inside of which had been previously preheated to 200°C, the adhesion improver (C-1) obtained in Example 1 was charged in an amount of 10 parts, and B-1 was charged in an amount of 90 parts as a polyolefin-based resin. Then, 1-minute preheating and melting were performed. Further, at 200°C, 3-minute heating and melt mixing were performed. After completion of melt mixing, the resulting product was taken out of the system, and was allowed to cool, resulting in a resin composition 6 including an adhesion improver and a polyolefin-based resin. The interfacial shear strength of the resulting resin composition 6 was measured. The results are shown in Table 3.

Examples 7 to 12, and Examples 20 to 34

Resin compositions 7 to 12, and resin compositions 20 to 34 were obtained by the same operation using the same device as in Example 6 with polyolefin-based resins B-1 and 2, and the adhesion improvers C-2 to 12 obtained in Examples 2 to 5, and Examples 13 to 19 at respective blend ratios (parts) described in Table 3A to Table 3C. Each interfacial shear strength of the resulting resin compositions 7 to 12, and the resulting resin compositions 20 to 34 was measured. The results are shown in Table 3A to Table 3C.

[Table 3A]

| Example | 6 | 7 | 8 | 9 | 10 | 11 | 12 |
|---|---|---|---|---|---|---|---|
| B-1 | 90 | 90 | 90 | 95 | 97.5 | 97.5 | 97.5 |
| C-1 | 10 | | | | | | |
| C-2 | | 10 | | | | | |
| C-3 | | | 10 | 5 | 2.5 | | |
| C-4 | | | | | | 2.5 | |
| C-5 | | | | | | | 2.5 |
| Interfacial shear strength (MPa) | 24 | 30 | 41 | 39 | 24 | 28 | 37 |

[Table 3B]

| Example | 20 | 21 | 22 | 23 | 24 | 25 | 26 |
|---|---|---|---|---|---|---|---|
| B-1 | | 95 | 95 | 95 | 95 | 97.5 | 97.5 |
| B-2 | 95 | | | | | | |
| C-3 | 5 | | | | | | |

(continued)

| Example | 20 | 21 | 22 | 23 | 24 | 25 | 26 |
|---|---|---|---|---|---|---|---|
| C-5 | | 5 | | | | | |
| C-6 | | | 5 | | | 2.5 | |
| C-7 | | | | 5 | | | 2.5 |
| C-8 | | | | | 5 | | |
| Interfacial shear Strength (MPa) | 37 | 37 | 36 | 23 | 36 | 37 | 25 |

[Table 3C]

| Example | 27 | 28 | 29 | 30 | 31 | 32 | 33 | 34 |
|---|---|---|---|---|---|---|---|---|
| B-1 | | | | | | | | 95 |
| B-2 | 97.5 | 97.5 | 95 | 97.5 | 95 | 95 | 95 | |
| C-3 | 2.5 | | | | | | | |
| C-7 | | 2.5 | | | | | | |
| C-8 | | | 5 | 2.5 | | | | |
| C-9 | | | | | 5 | | | |
| C-11 | | | | | | 5 | | |
| C-12 | | | | | | | 5 | 5 |
| Interfacial shear Strength (MPa) | 35 | 32 | 38 | 41 | 25 | 38 | 36 | 37 |

Comparative Examples 1 to 6

Resin compositions H1 to H5 were obtained by the same operation using the same device as in Example 6 with polyolefin-based resins B-1 and 2, and adhesion improvers d-1, e-1, SC-1, and SC-2 at respective blend ratios (parts) described in Table 4. Each interfacial shear strength of the resulting resin compositions H1 to H6 was measured. The results are shown in Table 4. The interfacial shear strength is related to the adhesion between the carbon fibers and the resin. A higher interfacial shear strength results in better adhesion.

[Table 4]

| Comparative Example | 1 | 2 | 3 | 4 | 5 | 6 |
|---|---|---|---|---|---|---|
| B-1 | 90 | 90 | 90 | 90 | 100 | |
| B-2 | | | | | | 100 |
| d-1 | 10 | | | | | |
| e-1 | | 10 | | | | |
| SC-1 | | | 10 | | | |
| SC-2 | | | | 10 | | |
| Interfacial shear strength (MPa) | 19 | 14 | 17 | 19 | 9 | 8 |

Applied Example 1

Using a twin screw extruder (TEM 26SS manufactured by Toshiba Machine Co., Ltd.), 70 parts of the resin composition 9 obtained in Example 9 was supplied from a main hopper. Then, a carbon fiber A-1 was supplied in an amount of 30 parts from its downstream side hopper, and the materials were kneaded at a barrel temperature of 230°C, and a rotation rate of 200 rpm. The supply of the raw materials was adjusted by a feeder. A carbon fiber-containing resin

composition was discharged from a die port, and the resulting strand was cooled. Then, the strand was cut by a cutter, resulting in a pellet-shaped carbon fiber-reinforced resin composition. The resulting pellet was subjected to injection molding at a cylinder temperature of 230°C, a mold temperature of 40°C, and a back pressure of 3 MPa using an injection molding machine (J180AD manufactured by Japan Steel Works, Ltd.), resulting in a molded product. The carbon fiber content and the mechanical physical properties of the resulting molded product are shown in Table 5.

Applied Examples 2 to 3, and Applied Comparative Examples 1 to 2

Each pellet of carbon fiber-reinforced resin compositions was obtained by the same operation using the same device as in Example 1, except for replacing the resin composition with the resin compositions 6 and 29, and H1 and H3 obtained in Examples 6 and 29, and Comparative Examples 1 and 3, respectively. The resulting pellet was formed as a molded product. The carbon fiber contents and the mechanical physical properties of the resulting molded products are shown in Table 5.

[Table 5]

| Applied Example | 1 | 2 | 3 | Comparative 1 | Comparative 2 |
|---|---|---|---|---|---|
| Resin composition No. | 9 | 6 | 29 | H1 | H3 |
| Carbon fiber content (%) | 30 | 30 | 30 | 30 | 30 |
| Interfacial shear strength (MPa) | 39 | 24 | 38 | 19 | 17 |
| Tensile rupture strength (MPa) | 135 | 82 | 166 | 61 | 56 |
| Tensile elastic modulus (GPa) | 11 | 11 | 12 | 9 | 10 |
| Tensile rupture strain (%) | 3 | 2 | 3 | 2 | 2 |
| Bending strength (MPa) | 184 | 110 | 245 | 87 | 88 |
| Bending elastic modulus (GPa) | 14 | 14 | 15 | 12 | 13 |
| Charpy impact strength ($KJ/m^2$) | 14 | 14 | 13 | 14 | 10 |
| Load deflection temperature (°C) | 156 | 154 | 163 | 148 | 147 |

Applied Examples 4 to 16, and Applied Comparative Examples 3 to 5

Each pellet of carbon fiber-reinforced resin compositions was obtained in a similar or equivalent manner using a similar or equivalent device to in Example 1, except for replacing the resin composition with the resin compositions 9, 20 to 24, 26, and 29 to 34, and H1, H5, and H6 obtained in Examples 9, 20 to 24, 26, and 29 to 34, and Comparative Examples 1, 5, and 6, respectively, and the back pressure at injection molding being set to 20 MPa. The resulting pellet was formed as a molded product. The carbon fiber contents and the mechanical physical properties of the resulting molded products are shown in Table 6A and Table 6B.

[Table 6A]

| Applied Example | 4 | 5 | 6 | 7 | 8 | 9 | 10 | 11 |
|---|---|---|---|---|---|---|---|---|
| Resin composition No. | 9 | 20 | 21 | 22 | 23 | 24 | 26 | 29 |
| Carbon fiber content (%) | 30 | 30 | 30 | 30 | 30 | 30 | 30 | 30 |
| Interfacial shear strength (MPa) | 39 | 37 | 37 | 36 | 23 | 36 | 25 | 38 |
| Tensile rupture strength (MPa) | 137 | 153 | 149 | 148 | 145 | 148 | 126 | 160 |
| Tensile elastic modulus (GPa) | 11 | 12 | 12 | 12 | 12 | 12 | 12 | 13 |
| Tensile rupture strain (%) | 4 | 3 | 4 | 3 | 3 | 3 | 2 | 3 |
| Bending strength (MPa) | 190 | 199 | 203 | 199 | 192 | 199 | 163 | 204 |
| Bending elastic modulus (GPa) | 14 | 14 | 15 | 15 | 15 | 14 | 14 | 15 |
| Charpy impact strength ($KJ/m^2$) | 7 | 8 | 8 | 7 | 7 | 8 | 6 | 7 |

(continued)

| Applied Example | 4 | 5 | 6 | 7 | 8 | 9 | 10 | 11 |
|---|---|---|---|---|---|---|---|---|
| Load deflection temperature (°C) | 148 | 150 | 150 | 151 | 149 | 150 | 149 | 154 |

[Table 6B]

| Applied Example | 12 | 13 | 14 | 15 | 16 | Comparative 3 | Comparative 4 | Comparative 5 |
|---|---|---|---|---|---|---|---|---|
| Resin composition No. | 30 | 31 | 32 | 33 | 34 | H1 | H5 | H6 |
| Carbon fiber content (%) | 30 | 30 | 30 | 30 | 30 | 30 | 30 | 30 |
| Interfacial shear strength (MPa) | 41 | 25 | 38 | 36 | 37 | 19 | 9 | 8 |
| Tensile rupture strength (MPa) | 148 | 127 | 145 | 159 | 146 | 67 | 68 | 76 |
| Tensile elastic modulus (GPa) | 13 | 11 | 11 | 13 | 12 | 11 | 11 | 12 |
| Tensile rupture strain (%) | 3 | 3 | 4 | 3 | 4 | 1 | 1 | 1 |
| Bending strength (MPa) | 181 | 174 | 199 | 206 | 196 | 90 | 85 | 97 |
| Bending elastic modulus (GPa) | 15 | 15 | 15 | 15 | 14 | 14 | 14 | 15 |
| Charpy impact strength ($KJ/m^2$) | 6 | 6 | 7 | 7 | 8 | 5 | 5 | 5 |
| Load deflection temperature (°C) | 153 | 154 | 155 | 155 | 152 | 139 | 131 | 143 |

The results up to this point indicate that the molded product of a carbon fiber-reinforced resin composition using the adhesion improver of the present invention is more improved in mechanical physical properties, and is more excellent in the strength and the rigidity than the molded products of Comparative Examples.

[Industrial Applicability]

The molded products obtainable from a carbon fiber-reinforced resin composition using the adhesion improver of the present invention can be preferably used as automobile parts (a front end, a fan shroud, a cooling fan, an engine undercover, an engine cover, a radiator box, a side door, a back door inner, a back door outer, an outside sheet, a roof rail, a door handle, a luggage box, a wheel cover, a steering wheel, a cooling module, and an air cleaner), two-wheeled vehicle/bicycle components (a luggage box, a steering wheel, and a wheel), house associated parts (hot water cleaning valve seat parts, bathroom parts, chair legs, valves, and a meter box), others (power tool parts, a mower handle, a hose joint, resin bolt, and a concrete form), automobile parts particularly required to have rigidity and durability (front end module (including a fan shroud, and a cooling module), an air cleaner, and door parts), and valves.

## Claims

**1.** An adhesion improver for use in a carbon fiber-reinforced resin composition including carbon fibers and a polyolefin-based resin, the adhesion improver comprising:

an acid-modified polyolefin-based resin unit; and
an epoxy resin unit, the acid-modified polyolefin-based resin unit and the epoxy resin unit being linked via an ester structure, wherein
the epoxy resin unit includes a secondary hydroxy group.

**2.** The adhesion improver according to claim 1,
wherein the melt viscosity at 170°C is 50 to 1,500 Pa·s.

**3.** The adhesion improver according to claim 1 or 2,
wherein the acid-modified polyolefin-based resin unit is an acid-modified polypropylene-based resin unit.

**4.** A method for manufacturing the adhesion improver according to any one of claims 1 to 3, the method comprising:

using, as raw materials, an acid-modified polyolefin-based resin having an acid equivalent of 500 to 200,000 g/eq. and an epoxy resin, allowing the acid-modified polyolefin-based resin to react with the epoxy resin in the presence of a catalyst at 150°C to 250°C.

**5.** The method according to claim 4 for manufacturing the adhesion improver,
wherein the acid-modified polyolefin-based resin is allowed to react with the epoxy resin at a molar ratio (AE/EE) of carboxyl groups (AE) in the acid-modified polyolefin-based resin to epoxy groups (EE) in the epoxy resin of 1/1 to 100/1.

**6.** The method according to claim 4 or 5 for manufacturing the adhesion improver,
wherein the acid-modified polyolefin-based resin is at least one selected from a (meth)acrylic acid-modified polyolefin resin, a maleic acid-modified polyolefin resin, or a maleic anhydride-modified polyolefin resin.

**7.** A matrix resin composition for a carbon fiber-reinforced resin composition, the matrix resin composition comprising:

a polyolefin-based resin; and
an adhesion improver, wherein
the adhesion improver includes an acid-modified polyolefin-based resin unit and an epoxy resin unit;
the acid-modified polyolefin-based resin unit and the epoxy resin unit are linked via an ester structure;
the epoxy resin unit including a secondary hydroxy group; and
the polyolefin-based resin and the adhesion improver are present at a blend ratio (mass ratio) of is 99/1 to 80/20.

[Fig. 1]

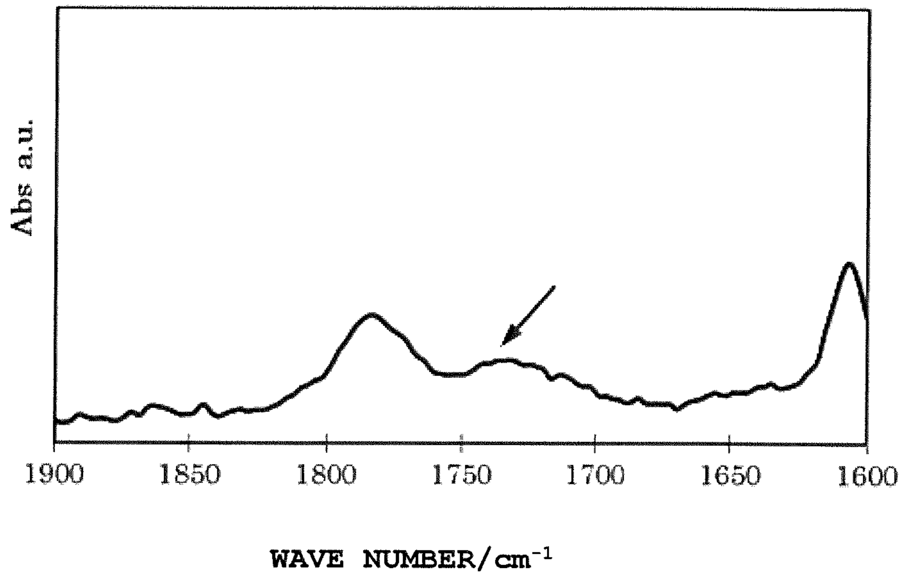
Abs a.u.
1900 1850 1800 1750 1700 1650 1600
WAVE NUMBER/cm-1

[Fig. 2]

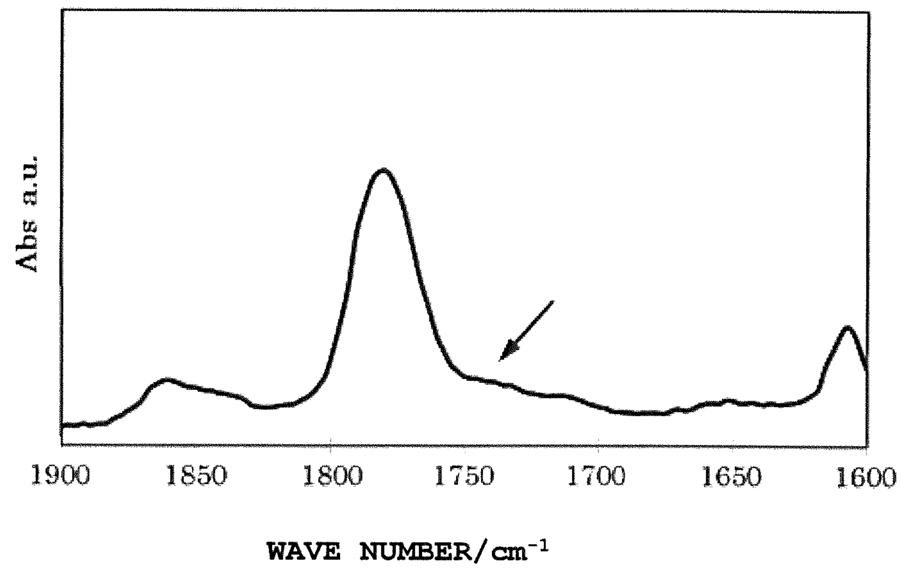
Abs a.u.
1900 1850 1800 1750 1700 1650 1600
WAVE NUMBER/cm-1

## INTERNATIONAL SEARCH REPORT

International application No. PCT/JP2018/007713

A. CLASSIFICATION OF SUBJECT MATTER
Int.Cl. C08G59/14(2006.01)i, C08K3/013(2018.01)i, C08K3/04(2006.01)i, C08K7/06(2006.01)i, C08L23/00(2006.01)i, C08L63/00(2006.01)i

According to International Patent Classification (IPC) or to both national classification and IPC

B. FIELDS SEARCHED

Minimum documentation searched (classification system followed by classification symbols)
Int.Cl. C08G59/00-59/72, C08L1/00-101/14, C08K3/00-13/08

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)
CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| A | JP 2005-213479 A (IDEMITSU KOSAN CO.) 11 August 2005, whole specification (Family: none) | 1-7 |
| A | JP 58-204020 A (MITSUBISHI RAYON CO., LTD.) 28 November 1983, whole specification & US 4550130 A, whole specification | 1-7 |
| A | JP 2011-063029 A (DAICEL CHEM) 31 March 2011, whole specification (Family: none) | 1-7 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 08.05.2018 | 22.05.2018 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No. PCT/JP2018/007713

C (Continuation). DOCUMENTS CONSIDERED TO BE RELEVANT

| Category* | Citation of document, with indication, where appropriate, of the relevant passages | Relevant to claim No. |
|---|---|---|
| A | JP 2010-150371 A (TOYOBO CO., LTD.) 08 July 2010, whole specification (Family: none) | 1-7 |
| A | JP 2016-035035 A (TOYO INK SC HOLDINGS CO., LTD.) 17 March 2016, whole specification & US 2016/0036013 A1, whole specification & CN 105315934 A & KR 10-2016-0016635 A & TW 201606013 A | 1-7 |
| A | WO 2016/047289 A1 (TOAGOSEI CO., LTD.) 31 March 2016, whole specification & US 2017/0297302 A1, whole specification & KR 10-2017-0057257 A & CN 107075335 A & TW 201617426 A | 1-7 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002013069 A
- JP 2003277525 A
- JP S58204020 B
- JP S5817156 B
- JP H4198243 B
- JP 2006249340 A
- JP H532723 B
- JP H1171431 B
- JP 2002249624 A
- JP 2002226510 A
- JP S523985 B
- JP S6260625 B
- JP S63132036 B
- JP S63264326 B
- JP H1208118 B
- JP S61118235 B
- JP H10264152 B
- WO 9719805 A